# FASCICULE DE BREVET EUROPEEN

(11) **EP 2 153 109 B1**
(45) Date de publication et mention de la délivrance du brevet: **04.08.2010**
(21) Numéro de dépôt: 08788062.1
(22) Date de dépôt: 27.03.2008
(51) Int. Cl.: F17C 13/00

(54) **PROCÉDÉ DE CONTRÔLE D'UN LOT HOMOGÈNE DE BOUTEILLES DE FLUIDE SOUS PRESSION**
VERFAHREN ZUR STEUERUNG EINES HOMOGENEN BÜNDELS VON UNTER DRUCK STEHENDEN FLÜSSIGKEITSZYLINDERN
METHOD FOR CONTROLLING A HOMOGENEOUS BATCH OF PRESSURISED FLUID CYLINDERS

(30) Priorité: 03.05.2007 FR 0754841
(43) Date de publication de la demande: 17.02.2010
(73) Titulaire: L'Air Liquide Société Anonyme pour l'Etude et l'Exploitation des Procédés Georges Claude, 75007 Paris (FR); Air Liquide Medical Systems, 92182 Antony Cedex (FR)
(72) Inventeur: BLEYS, Christian, F-77000 Livry sur Seine (FR); DECK, Philippe, F-93100 Montreuil (FR); PIN, Fabrice, F-78220 Viroflay (FR)
(74) Mandataire: De Cuenca, Emmanuel Jaime
(86) Numéro de dépôt international: PCT/FR2008/050536
(87) Numéro de publication internationale: WO 2008/139074

(56) Documents cités:
- EP-A- 0 534 876
- EP-A- 0 813 022
- EP-A- 1 055 862
- FR-A1- 2 391 455
- FR-A1- 2 504 650
- FR-A1- 2 863 037

## Description

La présente invention un concerne procédé de contrôle d'un lot homogène de bouteilles de fluide sous pression. Un tel procédé est divulgué par FR-A1-2 863 037, considéré comme reflétant l'état de la technique le plus proche.

L'invention concerne plus particulièrement un procédé de contrôle d'un lot homogène de bouteilles de fluide sous pression, notamment de gaz sous pression, lors d'au moins une partie du cycle d'utilisation desdites bouteilles.

La gestion et le suivi des bouteilles de gaz conditionné au cours de leur cycle d'utilisation revêtent une importance capitale à échelle industrielle.

En effet, le contrôle de bouteilles de gaz conditionné est soumis à des contraintes de sécurité et d'efficacité industrielle et de ce fait nécessite une logistique et une main d'oeuvre importante. Ceci est particulièrement sensible dans le domaine médical où une bouteille défectueuse ou contenant un mélange erroné peut avoir des conséquences graves.

Un but de la présente invention est de pallier tout ou partie des inconvénients de l'art antérieur relevés ci-dessus.

A cette fin, l'invention propose un procédé de contrôle d'un lot homogène de bouteilles de fluide sous pression lors d'au moins une partie du cycle d'utilisation desdites bouteilles, les bouteilles étant équipées chacune d'un robinet pourvu d'un dispositif électronique comprenant au moins un capteur de mesure de la pression à l'intérieur de la bouteille, un système de stockage/acquisition et de traitement de données et un émetteur d'ondes électromagnétiques, par exemple par fréquence radio, conformé pour transmettre à distance au moins l'une des informations parmi : l'identité de la bouteille et la pression mesurée à l'intérieur de ladite bouteille, le procédé comportant une étape d'émission dans laquelle toutes les bouteilles du lot émettent au moins une information de même nature lorsqu'elles sont simultanément dans une même phase du cycle d'utilisation, et une étape de comparaison des informations de même nature émises par les bouteilles pour détecter automatiquement une anomalie dans le lot.

Par ailleurs, des modes de réalisation de l'invention peuvent comporter l'une ou plusieurs des caractéristiques suivantes :
- l'étape d'émission est réalisée de façon indépendante par chaque dispositif électronique, par l'émission automatique et répétée des informations à des intervalles de temps déterminés,
- l'étape d'émission est réalisée de façon indépendante et automatique par chaque dispositif électronique, dès que le système de stockage/acquisition et de traitement de données détecte une condition de déclenchement relative à une des informations, tel qu'un seuil de pression (P) est atteint,
- chaque émission d'information par un émetteur est réalisée par l'envoie successif de plusieurs messages identiques redondants,
- le cycle d'utilisation du lot de bouteilles comprend une phase de pré-conditionnement durant laquelle l'étape de comparaison comprend : la comparaison du nombre de bouteilles détectées avec un nombre de bouteilles initialement prévue pour le conditionnement, et la comparaison du type de bouteilles détectées avec le conditionnement prévu, pour vérifier que le nombre et le type de bouteille est conforme au conditionnement prévu,
- le cycle d'utilisation du lot de bouteilles comprend une phase de conditionnement durant laquelle les bouteilles du lot sont soumises à un ou des remplissages et éventuellement à un ou des soutirages et éventuellement à un ou des nettoyages, l'étape de comparaison comprenant: la comparaison des courbes de variation des pressions (P) des bouteilles obtenues à partir des valeurs de pression (P) mesurées par les capteurs et émises successivement par les émetteurs, de façon à détecter une éventuelle courbe de variation de pression d'une bouteille non-homogène avec l'ensemble des autres courbes et résultant, par exemple, d'un robinet fermé et/ou d'un clapet défectueux,
- le cycle d'utilisation du lot de bouteilles comprend une phase de post-conditionnement, et en ce qu'il comporte une étape d'enregistrement des valeurs de pression (P) finales mesurées dans chacune des bouteilles et éventuellement la valeur de température (T) finales dans chacune des bouteilles mesurées par un capteur de température (T),
- le cycle d'utilisation du lot de bouteilles comprend une phase de quarantaine ou de stockage durant laquelle les bouteilles du lot ne sont pas utilisées, l'étape de comparaison comprenant: la comparaison des courbes de variation des pressions (P) des bouteilles ou la comparaison des valeurs de pression (P) de chaque bouteille avant et après la phase quarantaine, pour détecter une bouteille subissant une fuite lente,
- lors de la phase de quarantaine ou de stockage, l'étape de comparaison comprend la comparaison du nombre de bouteilles détectées à partir des informations reçues avec le nombre de bouteilles prédéfini,
- le cycle d'utilisation du lot de bouteilles comprend une phase de livraison du lot durant laquelle l'étape de comparaison comprend la comparaison et éventuellement l'enregistrement des caractéristiques du lot (1) avec un lot prédéfini,
- le dispositif électronique comprend une batterie et un capteur de température (T), les informations émises lors de l'étape d'émission comprenant:
   l'identité de la bouteille, la pression (P) mesurée à l'intérieur de ladite bouteille, la température (T) mesurée et éventuellement l'état de la batterie.

D'autres particularités et avantages apparaîtront à la lecture de la description ci-après, faite en référence aux figures dans lesquelles :
- la figure 1 représente une vue schématique et partielle illustrant la structure et le fonctionnement du contrôle d'un lot bouteille de fluide sous pression selon l'invention,
- la figure 2 représente une vue schématique et partielle illustrant la structure et le fonctionnement d'un exemple selon l'invention d'un dispositif électronique de mesure et de communication porté par chaque bouteille du lot de la figure 1.

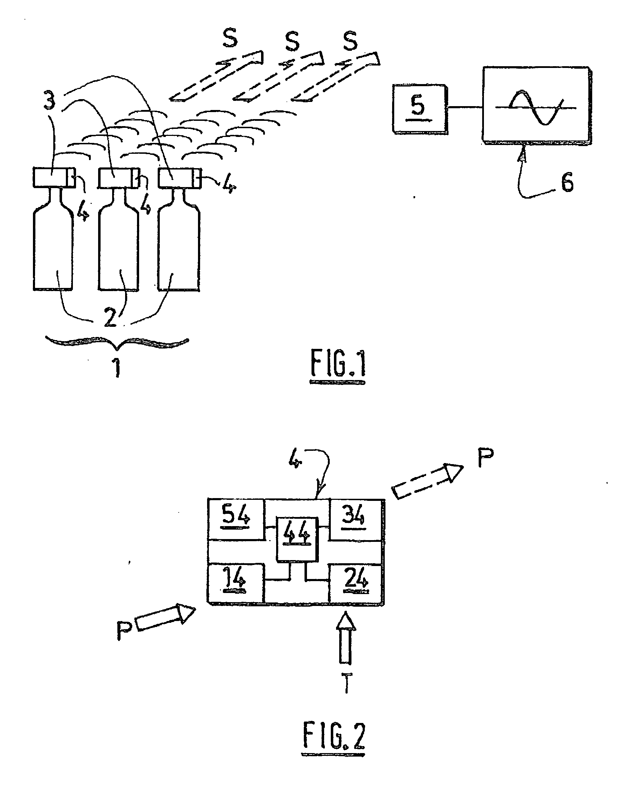

La figure 1 schématise un lot homogène de bouteilles 2 identiques de gaz sous pression.

Chaque bouteille 2 est équipée d'un robinet 3 pourvu d'un dispositif 4 électronique comprenant au moins un capteur 14 de mesure de la pression P à l'intérieur de la bouteille 2, un système 44 de stockage/acquisition et de traitement de données et un émetteur 34 d'ondes électromagnétiques, par exemple par fréquence radio, conformé pour transmettre à distance au moins l'une des informations parmi : l'identité de la bouteille 2 et la pression P mesurée à l'intérieur de ladite bouteille (ou une donnée représentative de la pression telle que l'autonomie restante).

Comme représenté à la figure 2, le capteur 14 de pression P, le système 44 de stockage/acquisition et de traitement de données, l'émetteur 34 d'ondes électromagnétiques, une batterie 54 et éventuellement un récepteur d'ondes et d'autres éléments tel qu'un capteur 24 de température T peuvent être intégrés au sein d'un même dispositif 4 appelé « manomètre électronique » venant se loger en lieu et place d'un manomètre mécanique de type connu. Un exemple de manomètre électronique est décrit par exemple dans le document WO 2005/09337.

Le manomètre électronique 4 est apte à communiquer avec un organe de réception 5 (émetteur) couplé (directement ou à distance) avec un système de traitement de données tel qu'un ordinateur 6.

En équipant selon l'invention toutes les bouteilles d'un lot identique d'un tel manomètre électronique 4, la gestion et le suivi du lot 1 peut s'opérer comme suit.

Le manomètre électronique 4 pourvu d'organes de communication Radio Fréquence peut envoyer à distance un signal S sous forme par exemple de trois trames redondantes contenant à titre d'exemple non limitatif : l'Identifiant de la bouteille 2, la pression P mesurée, la température T mesurée et différents états (par exemple une alarme de pression basse ou haute, un état de la batterie...).

Le signal S est envoyé automatiquement par chaque manomètre électronique 4 de façon plus ou moins fréquente en fonction de son état d'utilisation ou non (par exemple toutes les heures lorsqu'il n'est pas utilisé ou toutes les minutes lorsqu'il est utilisé). Ces envois à fréquences régulières peuvent être complétés par des envois immédiats automatiques si les conditions d'une alarme (par exemple une valeur de pression paramétré) sont réunies.

Des exemples de phases d'un cycle d'utilisation vont à présent être décrit en liaison avec l'invention (Remplissage/Quarantaine/Livraison/Stockage Plein/Utilisation/Retour Vide/Tri).

L'envoi de ces signaux S d'un lot 1 permet de localiser, tracer et identifier les bouteilles 2 du lot 1 de façon individuelle.

Pour un lot 1 comprenant par exemple douze bouteilles 2, la réception des douze identités de bouteille 2 permet de vérifier que les bouteilles 2 sont bien au nombre de douze dans le lot 1, que le produit est identique et que la recette de remplissage prévu en gaz est bien adaptée au type de bouteille 2.

Cette phase de vérification du nombre et de l'identité des bouteilles 2 peut être réalisée avant un conditionnement (ou pendant ce dernier pour travailler en temps masqué).

Pendant conditionnement :
Le suivi des courbes de conditionnement (de 10 à 40 acquisitions sur chacune des montrées et/ou descente de pression P) du lot 1 (au sens d'une rampe de remplissage simultané de plusieurs bouteilles 2) permet d'observer le bon déroulement du conditionnement. Le suivi d'un conditionnement correct se caractérise par des courbes de pression P aux tendances homogènes entre les bouteilles 2 du lot 1 (par exemple pendant les cycles de rinçage/remplissage/mise à l'air/mise au vide).

Ainsi, une bouteille 2 dont le robinet serait resté fermé sera aisément détectée et isolée car la pression mesurée P serait quasi nulle. De même, une bouteille 2 dont le clapet serait détérioré aura un fonctionnement non homogène aux autres bouteilles 2 du lot 1. Cette dernière détection est particulièrement délicate dans l'art antérieur et pourtant importante dans le cadre de mélanges de gaz car le risque est alors grand d'obtenir des mélanges dont le lot 1 n'est pas homogène.

Après conditionnement :
Il est possible d'enregistrer (et de comparer) les seuils de pressions/températures obtenus en fin de conditionnement individuellement pour chaque bouteille 2 du lot.

Pendant une éventuelle période de quarantaine :
L'examen et la comparaison des courbes de pression P durant la quarantaine permet de déceler et prévenir des fuites lentes éventuelles par une mise en relation des données d'une même bouteille 2 avant et après quarantaine et également par l'étude comparative des douze courbes de pression du lot 1.

Pendant une phase de livraison :
Les informations pertinentes sont obtenues aisément de manière automatique et permettent de garantir le lot 1 livré. Un état automatique des bouteilles 2 contenues dans le camion de livraison peut être réalisé. Ceci est avantageux pour vérifier la conformité du chargement. Ceci correspond par exemple à un afficheur de centralisation venant indiquer l'état des bouteilles (pleines/vide, nombre, type) dans un camion de pompier et/ou une ambulance qui permet la vérification d'un lot avant intervention.

Un système de localisation (type GPS) peut être prévu dans le manomètre électronique 4 pour permettre de vérifier l'adéquation entre le produit livré et le lieu de livraison.

Pendant le stockage chez l'utilisateur: l'invention permet un inventaire ainsi qu'un suivi des courbes de pression (détection fuites) comme décrit précédemment.

Pendant l'utilisation, l'inventeur permet aussi de détecter des anomalies par le suivi des courbes de pression (détection des fuites) comme décrit précédemment.

Pendant un retour de livraison :il est possible de suivre et dénombrer des bouteilles 2 reprises.

Tri : l'invention permet une automatisation des bouteilles à rechercher (rappel de lot 1, réeppreuve...).

## Revendications

1. Procédé de contrôle d'un lot (1) homogène de bouteilles (2) de fluide sous pression lors d'au moins une partie du cycle d'utilisation desdites bouteilles, les bouteilles (2) étant équipées chacune d'un robinet (3) pourvu d'un dispositif (4) électronique comprenant au moins un capteur (14) de mesure de la pression (P) régnant à l'intérieur de la bouteille (2), un système (44) de stockage/acquisition et de traitement de données et un émetteur (34) d'ondes électromagnétiques, par exemple par fréquence radio, conformé pour transmettre à distance au moins l'une des informations parmi : l'identité de la bouteille (2) et la pression (P) mesurée à l'intérieur de ladite bouteille, le procédé comportant une étape d'émission dans laquelle toutes les bouteilles (2) du lot (1) émettent au moins une information de même nature lorsqu'elles sont simultanément dans une même phase du cycle d'utilisation, et une étape de comparaison des informations de même nature émises par les bouteilles pour détecter automatiquement une anomalie dans le lot (1).

2. Procédé selon la revendication 1, **caractérisé en ce que** l'étape d'émission est réalisée de façon indépendante par chaque dispositif électronique (4), par l'émission automatique et répétée des informations à des intervalles de temps déterminés.

3. Procédé selon la revendication 1 ou 2, **caractérisé en ce que** l'étape d'émission est réalisée de façon indépendante et automatique par chaque dispositif électronique (4), dès que le système (44) de stockage/acquisition et de traitement de données détecte une condition de déclenchement relative à une des informations, tel qu'un seuil de pression (P) est atteint.

4. Procédé selon l'une quelconque des revendications précédentes, **caractérisé en ce que** chaque émission d'information par un émetteur (34) est réalisée par l'envoie successif de plusieurs messages identiques redondants.

5. Procédé selon l'une quelconque des revendications précédentes, **caractérisé en ce que** le cycle d'utilisation du lot (1) de bouteilles (2) comprend une phase de pré-conditionnement durant laquelle l'étape de comparaison comprend : la comparaison du nombre de bouteilles (2) détectées avec un nombre de bouteilles initialement prévue pour le conditionnement, et la comparaison du type de bouteilles (2) détectées avec le conditionnement prévu, pour vérifier que le nombre et le type de bouteille est conforme au conditionnement prévu.

6. Procédé selon l'une quelconque des revendications précédentes, **caractérisé en ce que** le cycle d'utilisation du lot (1) de bouteilles (2) comprend une phase de conditionnement durant laquelle les bouteilles (2) du lot (1) sont soumises à un ou des remplissages et éventuellement à un ou des soutirages et éventuellement à un ou des nettoyages, l'étape de comparaison comprenant: la comparaison des courbes de variation des pressions (P) des bouteilles (2) obtenues à partir des valeurs de pression (P) mesurées par les capteurs (14) et émises successivement par les émetteurs (34), de façon à détecter une éventuelle courbe de variation de pression d'une bouteille (2) non-homogène avec l'ensemble des autres courbes et résultant, par exemple, d'un robinet fermé et/ou d'un clapet défectueux.

7. Procédé selon l'une quelconque des revendications précédentes, **caractérisé en ce que** le cycle d'utilisation du lot (1) de bouteilles (2) comprend une phase de post-conditionnement, et **en ce qu'**il comporte une étape d'enregistrement des valeurs de pression (P) finales mesurées dans chacune des bouteilles (2) et éventuellement la valeur de température (T) finales dans chacune des bouteilles (2) mesurées par un capteur (24) de température (T).

8. Procédé selon l'une quelconque des revendications précédentes, **caractérisé en ce que** le cycle d'utilisation du lot (1) de bouteilles (2) comprend une phase de quarantaine ou de stockage durant laquelle les bouteilles (2) du lot (1) ne sont pas utilisées, l'étape de comparaison comprenant: la comparaison des courbes de variation des pressions (P) des bouteilles (2) ou la comparaison des valeurs de pression (P) de chaque bouteille (2) avant et après la phase quarantaine, pour détecter une bouteille (2) subissant une fuite lente.

9. Procédé selon la revendication 8, **caractérisé en ce** lors de la phase de quarantaine ou de stockage, l'étape de comparaison comprend la comparaison du nombre de bouteilles (2) détectées à partir des informations reçues avec le nombre de bouteilles prédéfini.

10. Procédé selon l'une quelconque des revendications précédentes, **caractérisé en ce que** le cycle d'utilisation du lot (1) de bouteilles (2) comprend une phase de livraison du lot (1) durant laquelle l'étape de comparaison comprend la comparaison et éventuellement l'enregistrement des caractéristiques du lot (1) avec un lot prédéfini.

11. Procédé selon l'une quelconque des revendications précédentes, **caractérisé en ce que** le dispositif (4) électronique comprend une batterie (54) et un capteur (24) de température (T), les informations émises lors de l'étape d'émission comprenant: l'identité de la bouteille (2), la pression (P) mesurée à l'intérieur de ladite bouteille, la température (T) mesurée et éventuellement l'état de la batterie (54).

## Claims

1. Method for checking a homogeneous batch (1) of pressurized-fluid cylinders (2) during at least part of the cycle of use of said cylinders, the cylinders (2) each being equipped with a valve (3) provided with an electronic device (4) comprising at least one sensor (14) for measuring the pressure (P) obtaining inside the cylinder (2), a data storage/acquisition and processing system (44) and an emitter (34) of electromagnetic waves, for example at radio frequency, designed to transmit to a distance at least one of the information items from among: the identity of the cylinder (2) and the pressure (P) measured inside said cylinder, the method involving an emission step in which all the cylinders (2) of the batch (1) emit at least one information item of the same nature when they are simultaneously in one and the same phase of the cycle of use, and a step of comparing the information items of the same nature emitted by the cylinders in order automatically to detect an anomaly in the batch (1).

2. Method according to Claim 1, **characterized in that** the emission step is performed independently by each electronic device (4) by automatically and repeatedly emitting information at determined time intervals.

3. Method according to Claim 1 or 2, **characterized in that** the emission step is performed independently and automatically by each electronic device (4) as soon as the data storage/acquisition and processing system (44) detects a trigger condition relating to one of the items of information, such that a pressure threshold (P) is reached.

4. Method according to any one of the preceding claims, **characterized in that** each emission of information by an emitter (34) is performed by successively sending out several redundant identical messages.

5. Method according to any one of the preceding claims, **characterized in that** the cycle of use of the batch (1) of cylinders (2) comprises a pre-conditioning phase during which the comparison step comprises:
comparing the number of cylinders (2) detected against a number of cylinders initially intended for the conditioning, and comparing the type of cylinders (2) detected against the intended conditioning, in order to verify that the number and type of cylinder conforms to the intended conditioning.

6. Method according to any one of the preceding claims, **characterized in that** the cycle of use of the batch (1) of cylinders (2) comprises a conditioning phase during which the cylinders (2) of the batch (1) are subjected to one or more filling operations and possibly to one or more withdrawing operations and possibly to one or more cleaning operations, the comparison step comprising: comparing curves of variation in pressures (P) of the cylinders (2) which have been obtained from the pressure values (P) measured by the sensors (14) and emitted successively by the emitters (34) so as to detect any curve of the pressure variation of a cylinder (2) that is inconsistent with all the other curves and is the result, for example, of a valve that is closed and/or of a valve shutter that is defective.

7. Method according to any one of the preceding claims, **characterized in that** the cycle of use of the batch (1) of cylinders (2) comprises a post-conditioning phase, and **in that** it comprises a step of recording the values of the final pressure (P) measured in each of the cylinders (2) and possibly the value of the final temperature (T) in each of the cylinders (2) as measured by a temperature (T) sensor (24).

8. Method according to any one of the preceding claims, **characterized in that** the cycle of use of the batch (1) of cylinders (2) comprises a quarantine or storage phase during which the cylinders (2) of the batch (1) are not used, the comparison step comprising:
comparing the curves of variation in pressures (P) of the cylinders (2) or comparing the values of the pressure (P) in each cylinder (2) before and after the quarantine phase in order to detect a cylinder (2) that is suffering from a slow leak.

9. Method according to Claim 8, **characterized in** during the quarantine or storage phase, the comparison step comprises comparing the number of cylinders (2) detected on the basis of the information received against the predefined number of cylinders.

10. Method according to any one of the preceding claims, **characterized in that** the cycle of use of the batch (1) of cylinders (2) comprises a phase of delivering the batch (1), during which phase the comparison step comprises comparing and possibly recording characteristics of the batch (1) against a predefined batch.

11. Method according to any one of the preceding claims, **characterized in that** the electronic device (4) comprises a battery (54) and a temperature (T) sensor (24), the information emitted during the emission step comprising: the identity of the cylinder (2), the pressure (P) measured inside said cylinder, the measured temperature (T) and possibly the state of the battery (54).

## Patentansprüche

1. Verfahren zum Steuern eines homogenen Loses (1) von Flaschen (2) für unter Druck stehendes Fluid wenigstens während eines Teils des Verwendungszyklus dieser Flaschen, wobei die Flaschen (2) jeweils mit einem Hahn (3) ausgerüstet sind, der mit einer elektronischen Vorrichtung (4) versehen ist, die enthält: wenigstens einen Sensor (14) zum Messen des im Inneren der Flasche (2) herrschenden Drucks (P), ein System (44) zum Speichern/Erfassen und Verarbeiten von Daten und einen Sender (34) für elektromagnetische Wellen beispielsweise mit Funkfrequenz, der dazu ausgelegt ist, eine Fernübertragung wenigstens einer der folgenden Informationen auszuführen: Identität der Flasche (2) und Druck (P), der in der Flasche gemessen wird, wobei das Verfahren einen Sendeschritt, in dem alle Flaschen (2) des Loses (1) wenigstens eine Information derselben Art aussenden, wenn sie sich gleichzeitig in derselben Phase des Verwendungszyklus befinden, und einen Schritt zum Vergleichen der Informationen derselben Art, die von den Flaschen ausgesendet werden, um automatisch eine Anomalie in dem Los (1) zu detektieren, enthält.

2. Verfahren nach Anspruch 1, **dadurch gekennzeichnet, dass** der Sendeschritt für jede elektronische Vorrichtung (4) durch automatisches und wiederholtes Senden von Informationen in bestimmten Zeitintervallen unabhängig verwirklicht wird.

3. Verfahren nach Anspruch 1 oder 2, **dadurch gekennzeichnet, dass** der Sendeschritt unabhängig und automatisch durch jede elektronische Vorrichtung (4) verwirklicht wird, sobald das System (44) zum Speichern/Erfassen und Verarbeiten von Daten eine Auslösebedingung in Bezug auf eine der Informationen wie etwa derjenigen, dass ein Druckschwellenwert (P) erreicht ist, detektiert.

4. Verfahren nach einem der vorhergehenden Ansprüche, **dadurch gekennzeichnet, dass** jedes Aussenden von Informationen durch einen Sender (34) durch aufeinander folgendes Schicken mehrerer redundanter identischer Nachrichten verwirklicht wird.

5. Verfahren nach einem der vorhergehenden Ansprüche, **dadurch gekennzeichnet, dass** der Verwendungszyklus des Loses (1) von Flaschen (2) eine Phase des Vorverpackens enthält, in der der Vergleichsschritt enthält: den Vergleich der Anzahl detektierter Flaschen (2) mit einer anfangs für das Verpacken vorgesehenen Anzahl von Flaschen und den Vergleich des Typs detektierter Flaschen (2) mit der vorgesehenen Verpackung, um zu verifizieren, dass die Flaschenanzahl und der Flaschentyp mit der vorgesehenen Verpackung in Übereinstimmung sind.

6. Verfahren nach einem der vorhergehenden Ansprüche, **dadurch gekennzeichnet, dass** der Verwendungszyklus des Loses (1) von Flaschen (2) eine Verpackungsphase enthält, in der die Flaschen (2) des Loses (1) einer oder mehreren Befüllungen und eventuell einer oder mehreren Anzapfungen und eventuell einer oder mehreren Reinigungen unterworfen werden, wobei der Vergleichsschritt enthält: den Vergleich der Schwankungskurven der Drücke (P) in den Flaschen (2), die anhand der Werte des Drucks (P) erhalten werden, die von den Sensoren (14) gemessen und durch die Sender (34) nacheinander gesendet werden, derart, dass eine eventuelle inhomogene Druckschwankungskurve einer Flasche (2) in Bezug auf die Gesamtheit der anderen Kurven, die sich beispielsweise aus einem geschlossenen Hahn und/oder einem fehlerhaften Ventil ergibt, detektiert wird.

7. Verfahren nach einem der vorhergehenden Ansprüche, **dadurch gekennzeichnet, dass** der Verwendungszyklus des Loses (1) von Flaschen (2) eine Nachverpackungsphase enthält und dass es einen Schritt des Aufzeichnens der endgültigen Werte des Drucks (P), die in jeder der Flaschen (2) gemessen werden, und eventuell des endgültigen Temperaturwertes (T) in jeder der Flaschen (2), der durch einen Sensor (24) für die Temperatur (T) gemessen wird, enthält.

8. Verfahren nach einem der vorhergehenden Ansprüche, **dadurch gekennzeichnet, dass** der Verwendungszyklus des Loses (1) von Flaschen (2) eine Quarantäne- oder Aufbewahrungsphase enthält, in der die Flaschen (2) des Loses (1) nicht verwendet werden, wobei der Vergleichsschritt enthält: den Vergleich der Schwankungskurven der Drücke (P) der Flaschen (2) oder den Vergleich der Werte des Drucks (P) jeder Flasche (2) vor und nach der Quarantänephase, um eine Flasche (2), die ein Kriechleck aufweist, zu detektieren.

9. Verfahren nach Anspruch 8, **dadurch gekennzeichnet, dass** in der Quarantäne- oder Aufbewahrungsphase der Vergleichsschritt den Vergleich der Anzahl von Flaschen (2), die anhand von empfangenen Informationen detektiert werden, mit der Anzahl im Voraus definierter Flaschen enthält.

10. Verfahren nach einem der vorhergehenden Ansprüche, **dadurch gekennzeichnet, dass** der Verwendungszyklus des Loses (1) von Flaschen (2) eine Phase der Auslieferung des Loses (1), in der der Vergleichsschritt den Vergleich und eventuell die Aufzeichnung der Charakteristiken des Loses (1) mit einem im Voraus definierten Los enthält.

11. Verfahren nach einem der vorhergehenden Ansprüche, **dadurch gekennzeichnet, dass** die elektronische Vorrichtung (4) eine Batterie (54) und einen Sensor (24) für die Temperatur (T) enthält, wobei die im Sendeschritt ausgesendeten Informationen enthalten: die Identität der Flasche (2), den Druck (P), der im Inneren der Flasche gemessen wird, die gemessene Temperatur (T) und eventuell den Zustand der Batterie (54).
